# EUROPEAN PATENT SPECIFICATION

(11) **EP 0 754 409 B1**
(45) Date of publication and mention of the grant of the patent: **10.10.2001**
(21) Application number: 96201875.0
(22) Date of filing: 05.07.1996
(51) Int. Cl.: A23L 1/16

(54) **Process for the preparation of instant fried noodles**
Verfahren zur Zubereitung von fritierten Schnellkochnudeln
Procédé pour la préparation de nouilles frites à cuisson instantanée

(30) Priority: 19.07.1995 SG 9500903
(43) Date of publication of application: 22.01.1997
(73) Proprietor: SOCIETE DES PRODUITS NESTLE S.A., 1800 Vevey (CH)
(72) Inventor: Greene, Robert, Singapore 257558 (SG); Toh, Tian Seng, Singapore 640941 (SG)
(74) Representative: Pate, Frederick George

(56) References cited:
- EP-A- 0 666 035

## Description

The present invention relates a process for the preparation of instant fried noodles, more particularly to instant fried noodles having a lower fat content than those prepared by traditional methods.

In the traditional process for preparing instant fried noodles, wheat flour is blended with conventional noodle materials such as a mixture of alkali metal carbonates and phosphates, seasoning and water to form a dough which is kneaded, rolled into sheets and cut into strips having a typical width of 0.6 to 3.0mm. The raw noodles are then steamed to gelatinise the starch, after which they have a moisture content of about 29 to 35% by weight and afterwards fried in oil for from about 1 to 2 minutes at a temperature of from 125° to 160°C. Typically, the fried noodles contain from 17 to 23% by weight of oil and have a moisture content of from 3 to 8% by weight.

Since oil contributes to a significant part of the raw material cost, the object of the present invention is to reduce the oil uptake of the fried noodles while still retaining organoleptic properties comparable to conventional fried noodles. We have found that one method by which this can be achieved is to partially dry the noodles after steaming and before frying. In the process of the present invention, the oil uptake can be reduced by up to 35%, i.e. to an oil content of from about 11 to 15% by weight.

According to the present invention there is provided a process for the preparation of instant fried noodles which comprises mixing wheat flour with water and other conventional noodle ingredients to form a noodle dough, sheeting the dough, cutting the dough into longitudinal strips of noodles, steaming the strips of noodles to gelatinise the starch, cutting and moulding the strips of steamed noodles into cake form, drying the moulded noodle cakes for a period of up to 5 minutes within a temperature range of more than 110°C and less than or equal to 220°C to a moisture content of less than 30% by weight, and then frying the dried noodles in frying oil.

The dough is conventionally mixed for from about 5 to 30 minutes and then kneaded and rolled into a sheet. The sheet is cut into strips of conventional width, e.g. about 0.6 to 3.0mm. Steaming is carried out conventionally to substantially gelatinise the starch in the noodles. The steamed noodles are then cut into suitable lengths and moulded into conventional noodle cakes of the required shape before drying. The dimensions of the noodle cakes are chosen to give a cake which may weigh from about 25 to 100g but more usually from about 65 to 85g, e.g. 70-80g.

The moulded noodle cakes are conveniently air dried for a period of from 15 seconds to 4 minutes, preferably from 20 seconds to 3 minutes and especially for a period of from 30 seconds to 2 minutes. The air drying is preferably carried out at a temperature of from 115° to 200°C, especially from 130° to 180°C. At higher drying temperatures, e.g. 160° to 200°C, the duration of the air drying of the noodle cakes may be advantageously be between 20 seconds and 1 minute. The moisture content of the noodle cakes is preferably reduced by the drying step to less than 20% by weight. The noodle cakes should not be overdried as oil penetration in the subsequent frying step would be too severely retarded resulting in a loss of organoleptic quality compared to conventional fried noodles.

Owing to the air drying step between steaming and frying, if it is desired to use existing noodle lines, some modifications may have to be made to incorporate the drier between the steamer and the fryer. Conveniently, the steamed, folded noodle cakes are transported through the drier in buckets along a gondola type conveyor. The drying time may be reduced to below 1 minute by using microwave means which may more easily be incorporated in existing noodle lines.

The partially dried moulded noodle cakes may be fried at a temperature of from 125° to 160°C. The time of frying may be between 15 and 70 seconds and preferably between 20 and 40 seconds.

The drying and subsequent reduction in the moisture content of the noodle cakes makes possible one or more of the following advantages:
a)reduction in oil uptake in the noodle cake,
b) reduction of the frying time, e.g. to from 70-20 seconds,
c) reduction of the size of the fryer,
d) reduction in the amount of oil required
e) the oil stays fresher
f) high drying temperature i.e. above 110°C improves reconstitution by creating a more open noodle structure and oil on the noodle surface is less apparent which could allow further oil reduction,
g) a shorter predrying time is required at a high drying temperature (i.e. above 110°C to achieve the same oil reduction)

Advantageously, the fat uptake can be further reduced by the following features:
1) use of flour with a high protein content, e.g. from 10-17%,
2) use of a bigger dimension, e.g. from 1.1mm to 3.0mm, which has less surface area per volume,
3) addition of wheat gluten, e.g. from 2% to 4% by weight, and
5) addition of maltodextrin, e.g. from 3% to 5% by weight.

After frying, the noodles are conveniently cooled and packaged by conventional methods.

The following example further illustrates the present invention. Parts and percentages are given by weight.

### Example.

75 parts of dry wheat flour, 1.5 parts of salt and 23.5 parts of Kan-sui ( an aqueous solution containing 1.0% by weight of potassium and sodium carbonates and phosphates) is placed in a horizontal dough mixer and mixed for 20 minutes. After mixing, the dough is reduced to a thickness of 1-2mm by passing through a series of rollers. The sheet then passes through a cutter where it is cut into strips of 1.5mm width. The strips are steamed conventionally and then cut and moulded into noodle cakes the dimensions of which are 110mm x 110mm x 25mm (weight about 75g). The moulded noodle cakes are transferred to buckets and transported on a gondola type conveyor through an air drier and dried at 150°C for 50 seconds to a moisture content of 13%. The dried noodles are conveyed to a fryer and fried at 150°C for 30 seconds. The oil content of the fried noodles was found to be 11% - instead of a typical value of 20%.

After frying, the noodles are transported to a cooling conveyor where they are cooled to ambient temperature and then to a packing machine where they are packed into cartons.

The instant fried noodles have an excellent storage stability and can be reconstituted for consumption by cooking or soaking in boiling water for 2-3 minutes.

## Claims

1. A process for the preparation of instant fried noodles which comprises mixing wheat flour with water and other conventional noodle ingredients to form a noodle dough, sheeting the dough, cutting the dough into longitudinal strips of noodles, steaming the strips of noodles to gelatinise the starch, cutting and moulding the strips of steamed noodles into cake form, drying the moulded noodle cakes for a period of up to 5 minutes within a temperature range of more than 110° and less than or equal to 220°C to a moisture content of less than 30% by weight, and then frying the dried noodles in frying oil.

2. A process according to claim 1 wherein the moulded noodle cakes are air-dried for a period of from 15 seconds to 5 minutes and at a temperature of 115°C to 200°C.

3. A process according to claim 1 wherein the moisture content of the noodle cakes is reduced by the drying step to less than 20% by weight.

4. A process according to claim 1 wherein the moisture content of the noodle cakes is not reduced to below 15% by weight.

5. A process according to claim 1 wherein the steamed, moulded noodle cakes are dried by transporting through a drier in buckets along a gondola type conveyor.

6. A process according to claim 1 wherein the frying time is from 15-70 seconds and the frying temperature is from 125°-160°C.

7. A process according to claim 1 wherein the frying time is between 20 and 40 seconds.

8. A process according to claim 1 wherein the protein content of the wheat flour is from 10 to 17%.

9. A process according to claim 1 wherein wheat gluten or maltodextrin is added to the ingredients for mixing into the noodle dough.

## Patentansprüche

1. Verfahren zur Zubereitung von frittierten Schnellkochnudeln, welches umfaßt Vermischen von Weizenmehl mit Wasser und anderen herkömmlichen Nudelzutaten zur Bildung eines Nudelteiges, Formen des Teiges zu einer Schicht, Schneiden des Teiges in Nudel-Längsstreifen, Dämpfen der Nudelstreifen zur Gelatinierung der Stärke, Schneiden und Formen der gedämpften Nudelstreifen zu einer Kuchen-Form, Trocknen der geformten Nudelkuchen während einer Zeitspanne von bis zu 5 Minuten, innerhalb eines Temperaturbereiches von mehr als 110 °C und von weniger als oder gleich 220 °C, bis zu einem Feuchtigkeitsgehalt von weniger als 30 Gew.-% und anschließendes Frittieren der getrockneten Nudeln in Frittieröl.

2. Verfahren nach Anspruch 1, wobei die geformten Nudelkuchen während einer Zeitspanne von 15 Sekunden bis 5 Minuten und bei einer Temperatur von 115 °C bis 200 °C luftgetrocknet werden.

3. Verfahren nach Anspruch 1, wobei der Feuchtigkeitsgehalt der Nudelkuchen durch den Trocknungsschritt auf weniger als 20 Gew.-% verringert wird.

4. Verfahren nach Anspruch 1, wobei der Feuchtigkeitsgehalt der Nudelkuchen nicht unter 15 Gew.-% verringert wird.

5. Verfahren nach Anspruch 1, wobei die gedämpften, geformten Nudelkuchen getrocknet werden, in dem sie durch eine Trocknungsvorrichtung in eimerartigen Behältern entlang einer Beförderungsvorrichtung vom Gondel-Typ transportiert werden.

6. Verfahren nach Anspruch 1, wobei die Frittierzeit von 15 bis 70 Sekunden und die Frittiertemperatur von 125° bis 160 °C beträgt.

7. Verfahren nach Anspruch 1, wobei die Frittierzeit zwischen 20 und 40 Sekunden beträgt.

8. Verfahren nach Anspruch 1, wobei der Proteingehalt des Weizenmehls von 10 bis 17 % beträgt.

9. Verfahren nach Anspruch 1, wobei Weizengluten oder Maltodextrin den, dem Nudelteig beizumischenden Zutaten zugesetzt werden.

## Revendications

1. Procédé pour la préparation de nouilles frites à cuisson instantanée, qui comprend les étapes consistant à mélanger de la farine de blé à de l'eau et d'autres ingrédients classiques pour la préparation de nouilles afin de former une pâte pour préparation de nouilles, à réduire la pâte en feuilles, à couper la pâte en bandes longitudinales de nouilles, à traiter à la vapeur d'eau les bandes de nouilles pour provoquer la gélatinisation de l'amidon, à couper et mouler les bandes de nouilles traitées à la vapeur d'eau sous forme d'un gâteau, à sécher les gâteaux de nouilles moulés pendant une période de temps allant jusqu'à 5 minutes à une température comprise dans l'intervalle de plus de 110° à une valeur inférieure ou égale à 220°C, à une teneur en humidité inférieure à 30 % en poids, puis à faire frire les nouilles séchées dans de l'huile de friture.

2. Procédé suivant la revendication 1, dans lequel les gâteaux de nouilles moulés sont séchés à l'air pendant une période de temps de 15 secondes à 5 minutes et à une température comprise dans l'intervalle de 150°C à 200°C.

3. Procédé suivant la revendication 1, dans lequel la teneur en humidité des gâteaux de nouilles est réduite par l'étape de séchage à une valeur inférieure à 20 % en poids.

4. Procédé suivant la revendication 1, dans lequel la teneur en humidité des gâteaux de nouilles n'est pas réduite à une valeur inférieure à 15 % en poids.

5. Procédé suivant la revendication 1, dans lequel les gâteaux de nouilles traités à la vapeur d'eau et moulés sont séchés en les transportant à travers un dispositif de séchage dans des paniers le long d'un transporteur du type à nacelle.

6. Procédé suivant la revendication 1, dans lequel le temps de friture est compris dans l'intervalle de 15 à 70 secondes et la température de friture est comprise dans l'intervalle de 125°C à 160°C.

7. Procédé suivant la revendication 1, dans lequel le temps de friture est compris dans l'intervalle de 20 à 40 secondes.

8. Procédé suivant la revendication 1, dans lequel la teneur en protéines de la farine de blé est comprise dans l'intervalle de 10 à 17 %.

9. Procédé suivant la revendication 1, dans lequel du gluten de blé ou de la maltodextrine est ajouté aux ingrédients pour le mélange à la pâte pour préparation de nouilles.
